# NEUE EUROPÄISCHE PATENTSCHRIFT

(11) **EP 1 669 223 B2**
(45) Veröffentlichungstag und Bekanntmachung des Hinweises auf die Entscheidung über den Einspruch: **19.08.2015**
(45) Hinweis auf die Patenterteilung: 11.03.2009
(21) Anmeldenummer: 04292936.4
(22) Anmeldetag: 09.12.2004
(51) Int. Cl.: B60H 1/00

(54) **Heizungs- oder Klimatisierungseinrichtung mit Trommelklappe**
Heating or air conditioning device with a drum valve
Système de chauffage ou de climatisation avec volet de type tambour

(43) Veröffentlichungstag der Anmeldung: 14.06.2006
(73) Patentinhaber: Mahle Behr France Rouffach S.A.S, 68250 Rouffach (FR)
(72) Erfinder: Fuentes, Céline, 68124 Logelbach (FR); Klein, Henri, 68000 Colmar (FR)
(74) Vertreter: Grauel, Andreas

(56) Entgegenhaltungen:
- EP-A- 1 013 490
- EP-A- 1 013 491
- EP-A1- 1 277 605
- EP-A1- 1 514 707
- DE-A1- 10 025 334
- FR-A1- 2 773 111
- US-A- 4 683 913

## Beschreibung

Die Erfindung betrifft eine Heizungs- oder Klimatisierungseinrichtung mit einer Trommelklappe gemäß dem Oberbegriff des Anspruches 1.

Bei Heizungs- oder Klimatisierungseinrichtungen ist häufig im Luftführungsgehäuse vor dem Mischraum eine Trommelklappe als Mischklappe angeordnet, welche die Öffnungen des Warm- und Kaltluftkanals je nach Stellung ganz oder teilweise freigibt oder verschließt. Die Trommelklappen weisen hierbei üblicherweise einen absperrenden, verschwenkbaren Teil in Form eines Teils eines hohlzylindrischen Bereichs und zwei seitlich hiervon angeordnete, in radialer Richtung verlaufende Kreissegmente auf, wobei die Trommelklappe um eine Achse verschwenkbar ist, die koaxial zum hohlzylindrischen Bereich verläuft. Insbesondere bei kleinen Mischräumen kommt es bei Trommelklappen zu einer unzureichenden Vermischung der kalten, vom Verdampfer kommenden Luft und der warmen, vom Heizkörper kommenden Luft.

Eine Heizungs- oder Klimatisierungseinrichtung der eingangs genannten Art , die insbesondere in Hinblick auf die Vermischung von kalter, vom Verdampfer kommenden Luft oder von durch ein Gebläse getriebner Frischluft beziehungsweise Außenluft und von warmer, vom Heizkörper kommender Luft bei einem möglichst kleinen Mischraum verbessert ist, ist aus gattungsgemäßen EP 1 013 491 bekannt.

EP 1 013 491 offenbart eine Heizungs- oder Klimatisierungseinrichtung, insbesondere für ein Kraftfahrzeug, mit einem in einem Gehäuse angeordneten ersten Wärmetauscher und/oder einem zweiten Wärmetauscher und einer als Mischklappe dienenden Trommelklappe, die nach dem ersten und/oder nach dem zweiten Wärmetauscher im Bereich des Eintritts eines ersten und eines zweiten Luftkanals in einen Mischraum angeordnet ist, vorgesehen, wobei die Trommelklappe im Bereich mindestens einer Längskante ihres teilhohlzylindrischen Bereichs einen abstehenden Bereich aufweist, welcher in einer Endstellung der Trommelklappe einen in Strömungsrichtung vor dem Mischraum liegenden Durchlass zwischen dem ersten Luftkanal und dem zweiten Luftkanal abdeckt.

Eine derartige Trommelklappe ist relativ einfach und kostengünstig herstellbar. Ebenso sind die erforderlichen Veränderungen am Luftführungsgehäuse relativ gering und erfordern keinen wesentlichen zusätzlichen Aufwand. Durch das Vorsehen des Durchlasses wird eine Vorvermischung von kalter und warmer Luft ermöglicht, so dass im Prinzip eine Vergrößerung des Mischraums erfolgt. Die Trommelklappe kann sowohl für einfache Heizungseinrichtungen, als auch für ein- oder mehrzonige Klimatisierungseinrichtungen verwendet werden.

Der Erfindung liegt die Aufgabe zugrunde, eine Heizungs- oder Klimatisierungseinrichtung der eingangs genannten Art zu verbessern, inbesondere im Hinblick auf die Vereinfachung der Herstellung der Klappe. Diese Aufgabe wird erfindungsgemäß durch eine Heizungs- oder Klimatisierungseinrichtung mit den Merkmalen des Anspruches 1 gelöst. Vorteilhafte Ausgestaltungen sind Gegenstand der Unteransprüche.

Die Trommelklappe weist an beiden Längskanten einen abstehenden Bereich auf. Hierbei ist die Trommelklappe bevorzugt spiegelbildlich zur Mittellängsachse ausgebildet.

Die abstehenden Bereiche erstrecken sich nur über einen Teil der Längskanten der Trommelklappe. Hierbei können an einer Längskante auch mehrere abstehende Bereiche vorgesehen sein. Bevorzugt ist jedoch ein abstehender Bereich je Längskante vorgesehen.

Der abstehende Bereich ist mittig bezüglich der Längskante der Trommelklappe angeordnet, so dass eine möglichst gleichmäßige Vermischung der Luftströme ermöglicht wird.

Der abstehende Bereich erstreckt sich in radialer Richtung nach außen. Die radiale Richtung ermöglicht jedoch eine einfache Konstruktion, insbesondere in Hinblick auf die Anlageflächen im Bereich des Durchlasses. Femer ist bei einem in radialer Richtung abstehenden Bereich die Verwirbelung am besten.

Der abstehende Bereich weist eine im Wesentlichen rechteckförmige Gestalt auf, wobei die äußeren Ecken auch abgerundet oder abgeschrägt sein können.

Vorzugsweise ist an jeder Längskante mittig genau ein in radialer Richtung abstehender Bereich vorgesehen, wobei die Längserstreckung des abstehenden Bereichs vorzugsweise 50% +/- 25%, insbesondere +/- 10%, der Längserstreckung der Längskante entspricht.

Vorteilhafterweise können an den Längskanten zusätzliche Anschlagflächen der Trommelklappe ausgebildet sein, die zu einem geringen Maße einen zusätzlichen abstehenden Bereich bilden und mit einem Dichtmittel, beispielsweise einer Dichtlippe oder einer Umspritzung versehen sind. Diese Anschlagflächen dienen zum dichtenden Schließen der Luftkanäle in den jeweiligen Endstellungen der Trommelklappe.

Insbesondere bei einer Klimatisierungseinrichtung ist der erste Wärmetauscher als Verdampfer und der zweite Wärmetauscher als Heizkörper ausgebildet. Optional kann bei einer erfindungsgemäßen Heizungseinrichtung dieser erste Wärmetauscher entfallen, so dass nur ein Wärmetauscher vorgesehen ist, der als Heizkörper ausgebildet ist.

Bevorzugt ist bei einer erfindungsgemäßen Heizungs- oder Klimatisierungseinrichtung der erste Luftkanal ein Kaltluft- oder ein Frischluft- beziehungsweise ein Außenluftkanal. Der zweite Luftkanal ist vorteilhafterweise als Warmluftkanal ausgebildet.

In einer erfindungsgemäßen Variante ist ein dritter Wärmetauscher vorgesehen, der als elektrische Heizeinrichtung, insbesondere PTC-Heizeinrichtung ausgebildet und im Warmluftkanal angeordnet ist.

Bei der Heizungs- oder Klimatisierungseinrichtung strömt bevorzugt bei vorhandenem Kaltluftstrom - in Zwischenstellungen zwischen den beiden Endstellungen "maximal warm" und "maximal kalt" - ein Teil der kalten Luft des Kaltluftstroms aus dem Kaltluftkanal durch den Durchlass in den Warmluftkanal. Dadurch erfolgt eine Vergrößerung des Mischraums und somit der Mischstrecke in den Warmluftkanal hinein, wobei im Warmluftkanal nur eine gewisse Vorvermischung von kalter und warmer Luft erfolgt, insbesondere aber eine Verwirbelung des Warmluftstroms erzeugt wird, die bis in den Mischraum reicht und hier für eine verbesserte Vermischung sorgt, so dass ein deutlich kleinerer Mischraum als bei bekannten Klimaanlagen mit herkömmlichen teil-zylindrischen Trommelklappen zu vergleichbaren Vermischungen führt. Unter der Endstellung "maximal warm" ist dabei eine Klappenstellung zu verstehen, in der die Klappe den Kalt- oder Frischluftkanal vollständig oder maximal verschließt und den Warmluftkanal vollständig oder maximal öffnet. Analog versteht man unter der Endstellung "maximal kalt" eine Klappenstellung, in der die Klappe den Warmluftkanal vollständig oder maximal verschließt und den Kalt- oder Frischluftkanal vollständig oder maximal öffnet.

Im Folgenden ist die Erfindung anhand von eines Ausführungsbeispiels näher erläutert. Es zeigen:

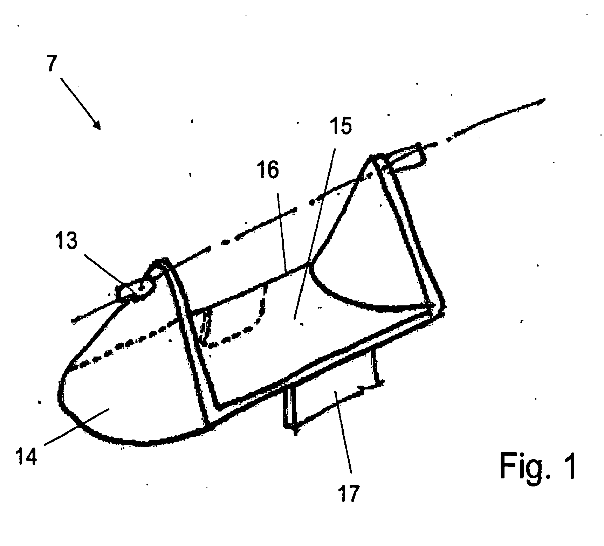

- Fig. 1: eine perspektivische Ansicht einer erfindungsgemäßen Trommelklappe,
- Fig. 2: einen Schnitt durch eine Kraftfahrzeug-Klimatisierungseinrichtung mit der Trommelklappe von Fig. 1 in der Betriebsstellung 100% warm,
- Fig. 3: einen Schnitt durch die Kraftfahrzeug- Klimatisierungseinrichtung von Fig. 1 in der Betriebsstellung 50% warm,
- Fig. 4: einen Schnitt durch die Kraftfahrzeug- Klimatisierungseinrichtung von Fig. 1 in der Betriebsstellung 100% kalt,
- Fig. 5: einen Schnitt durch die Kraftfahrzeug- Klimatisierungseinrichtung von Fig. 1 in einem mittleren Bereich entlang der Linie V-V in Fig. 7 in der Betriebsstellung 50% warm, wobei Pfeile die Luftströmung verdeutlichen,

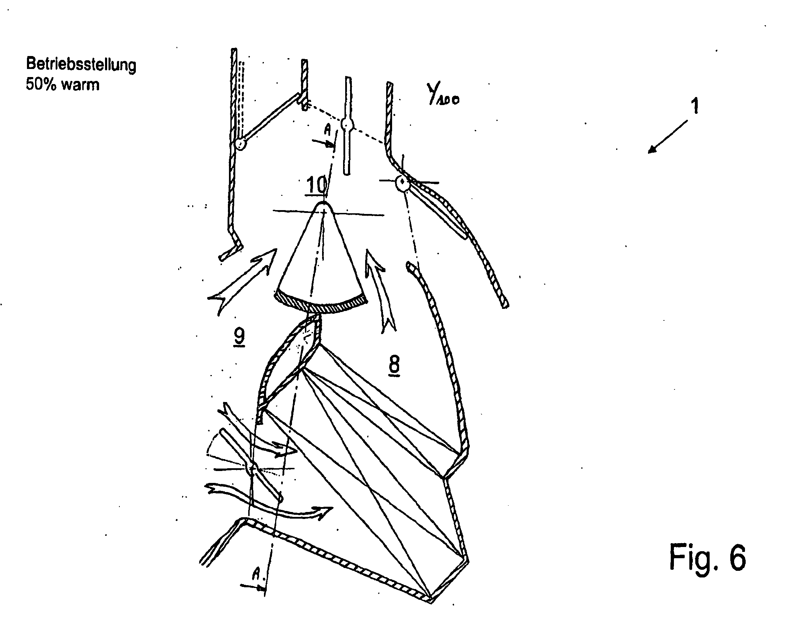

- Fig. 6: einen Schnitt durch die Kraftfahrzeug- Klimatisierungseinrichtung von Fig. 1 in einem Randbereich entlang der Linie VI-VI in Fig. 7 in der Betriebsstellung 50% warm, wobei Pfeile die Luftströmung verdeutlichen, und
- Fig. 7: einen Längsschnitt durch die Trommelklappe.

Eine Kraftfahrzeug- Klimatisierungseinrichtung 1 weist ein in einem Gehäuse 2 angeordnetes Gebläse (nicht dargestellt), einen Verdampfer (nicht dargestellt) und einen Heizkörper 5 mit Zuheizer 6 auf. Vorliegend ist der Einfachheit halber eine einzonige Klimatisierungseinrichtung dargestellt.

Zur Mischung und Temperierung der Luft, die dem Fahrzeuginnenraum zugeführt werden soll, ist eine Trommelklappe 7 vorgesehen, welche - je nach Stellung - den vom Verdampfer kommenden Kaltluftkanal 9 oder den vom Heizkörper 5 und Zuheizer 6, beispielsweise einem elektrischen Zuheizer, kommenden Warmluftkanal 8 ganz oder teilweise verschließt bzw. öffnet. Nach der Trommelklappe 7 ist ein Mischraum 10 angeordnet, von dem aus Luftkanäle in Richtung des Körpers und/oder des Kopfbereichs eines Fahrzeuginsassen im Fahrzeuginnenraum, zum Fußraum und zur Windschutzscheibe (Defrost) abzweigen, welche vorliegend durch einzelne Klappen 11 geregelt sind. Ferner ist vor dem Heizkörper 5 eine weitere Klappe 12 angeordnet, um bei gewünschtem Kühlen ein Einströmen von kalter Luft in den Heizkörper 5 zu verhindern.

Die Trommelklappe 7 weist eine Schwenkachse 13, in welcher sie gelagert ist, zwei Kreissegmente 14, die radial bezüglich der Schwenkachse 13 angeordnet sind, einen teil-hohlzylindrisch ausgebildeten, koaxial zur Schwenkachse 13 angeordneten Bereich 15 mit zwei die Ecken der Kreissegmente 14 parallel zur Schwenkachse 13 verbindendenden Längskanten 16 und je einem von den Längskanten 16 des Bereichs 15 in radialer Richtung nach außen, weg von der Schwenkachse 13 abstehenden, vorliegend rechteckförmigen Bereich 17 auf, wobei jeder der abstehenden, rechteckförmigen Bereiche 17 mittig bezüglich der Trommelklappe 7 angeordnet ist und sich nur über einen Teil der Länge der Längskanten 16 erstreckt (vgl.

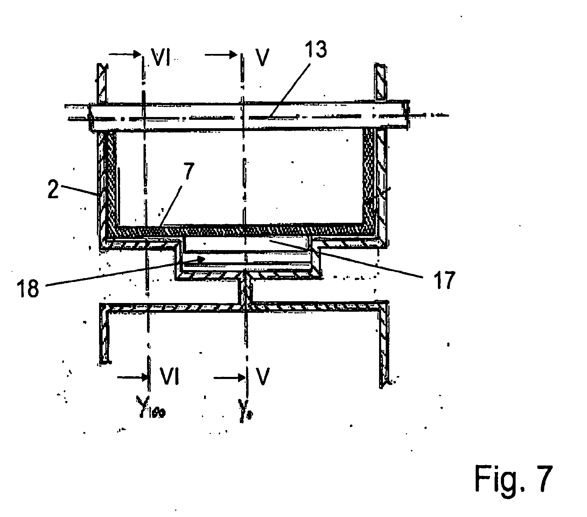

Fig. 7), vorliegend nur über die Hälfte der Länge, so dass im oberen und unteren Viertel kein abstehender Bereich 17 vorgesehen ist, sondern die Längskanten 16 das radial äußere Ende der Trommelklappe 7 bilden.

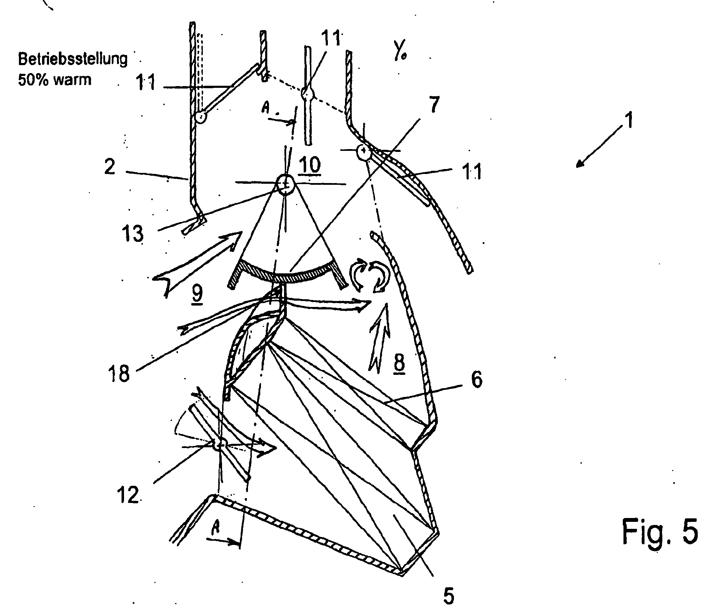

Die Trommelklappe 7 ist derart im Bereich der Einmündung des Warm- und Kaltluftkanals in den Mischraum 10 angeordnet, dass in normaler Luftströmungsrichtung die Schwenkachse 13 nach dem Bereich 15 angeordnet ist, so dass die abstehenden Bereiche 17 etwas in den Warm- bzw. Kaltluftkanal hinein ragen (vgl. Fig. 5).

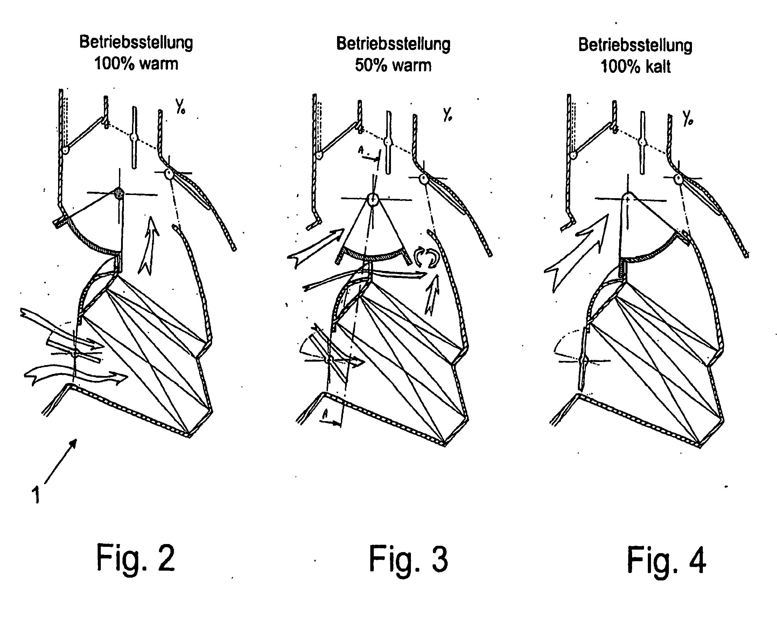

Das Gehäuse 2 ist im Bereich der Trommelklappe 7 derart ausgebildet, dass ein den Abmessungen der abstehenden Bereiche 17 entsprechender Durchlass 18 (in Fig. 5 in etwa im mittleren Bereich der Trommelklappe 7) vorgesehen ist, welcher in den Endstellungen der Trommelklappe 7 jeweils durch den entsprechend hiervor positionierten abstehenden Bereich 17 abgedeckt wird. In den seitlichen Bereichen der Trommelklappe 7 ist kein entsprechender Durchlass vorgesehen, so dass hier in keiner Stellung eine Querströmung zwischen dem Kaltluftkanal 9 und dem Warmluftkanal 8 möglich ist. Die jeweiligen Endstellungen der Trommelklappe 7 sind in den Figuren 2 und 4 dargestellt. Wobei die in Fig.2 dargestellte Stellung der Trommelklappe 7 einer Einstellung "maximal warm" entspricht, wobei die Trommelklappe 7 den Kaltluftkanal 9 vollständig verschließt und den Warmluftkanal 8 vollständig freigibt. Analog ist in Fig. 4 die Einstellung "maximal kalt" gezeigt, wobei die Trommelklappe 7 den Warmluftkanal 8 vollständig verschließt und den Kaltluftkanal 9 vollständig freigibt

In Folge der in Mischstellungen vorhandenen Kalt-Querströmung, verbunden mit dem seitlichen Umströmen der abstehenden Bereiche 17 von Warmluft erfolgt eine Vor-Verwirbelung und Vor-Mischung des Warmluftstroms bzw. des Warm- und Kaltluftstroms, so dass der bereits etwas mit Kaltluft vermischte Warmluftstrom mit Wirbeln in den Mischraum eintritt, wodurch die Vermischung von warmer und kalter Luft verbessert und die erforderliche Mischstrecke verringert wird.

In den Figuren nicht dargestellt sind optionale zusätzliche Anschlagflächen die an den Längskanten der Trommelklappe 7 ausgebildet sind und zu einem geringen Maße einen zusätzlichen abstehenden Bereich bilden, wobei dieser mit einem Dichtmittel, beispielsweise einer Dichtlippe oder einer Umspritzung versehen ist. Diese Anschlagflächen dienen zum dichtenden Schließen des Warmluft- 8 beziehungsweise Kaltluftkanals 9 in den jeweiligen Endstellungen der Trommelklappe 7. Es versteht sich von selbst, dass auch die abstehenden Bereiche 17 entlang ihrer Endkanten mit einem solchen Dichtmittel versehen sein können.

### Bezugszeichenliste

- 1: Klimaanlage
- 2: Gehäuse
- 5: Heizkörper
- 6: Zuheizer
- 7: Trommelklappe
- 8: Warmluftkanal
- 9: Kaltluftkanal
- 10: Mischraum
- 11: Klappe
- 12: Klappe
- 13: Schwenkachse
- 14: Kreissegment
- 15: Bereich
- 16: Längskante
- 17: abstehender Bereich
- 18: Durchlass

## Patentansprüche

1. Heizungs- oder Klimatislerungseinrichtung, insbesondere für ein Kraftfahrzeug, mit einem in einem Gehäuse (2) angeordneten ersten Wärmetauscher und/oder einem zweiten Wärmetauscher (5), einer als Mischklappe dienenden Trommelklappe (7), die nach dem ersten und/oder nach dem zweiten Wärmetauscher im Bereich des Eintritts eines ersten und eines zweiten Luftkanals (9, 8) in einen Mischraum (10) angeordnet ist, wobei die Trommelklappe (7) im Bereich mindestens einer Längskante (16) ihresteilhohlzylindrischen Bereichs (15) einen abstehenden Bereich (17) aufweist, welcher in einer Endstellung der Trommelklappe (7) einen in Strömungsrichtung vor dem Mischraum (10) liegenden Durchlass (18) zwischen dem ersten Luftkanal (9) und dem zweiten Luftkanal (8) abdeckt **dadurch gekennzeichnet, dass** der Durchlass (1B) derart im Gehäuse ausgebildet ist, dass er den Abmessungen des abstehenden Bereichs (17) der Mischklappe entspricht, wobei
die Trommelklappe (7) an beiden Längskanten (16) einen abstehenden Bereich (17) aufweist,
sich der abstehende Bereich (17) nur über einen Teil der Längskante (16) der Trommelklappe (7) erstreckt,
der abstehende Bereich (17) mittig bezüglich-der Längskante (16) der Trommelklappe (7) angeordnet ist und
sich der abstehende Bereichs (17) in radialer Richtung nach außen erstreckt und
der abstehende Bereich (17) eine im Wesentlichen rechteckförmige Gestalt aufweist.

2. Heizungs- oder Klimatisierungseinrichtung nach Anspruch 1, **dadurch gekennzeichnet, dass** an jeder Längskante (16) mittig genau ein in radialer Richtung abstehender Bereich (17) vorgesehen ist.

3. Heizungs- oder Klimatisierungseinrichtung nach Anspruch 2, dadurch gekennzelchnet, dass die Längserstreckung des abstehenden Bereichs (17) 50% +/- 25%, insbesondere +/- 10%, der Längserstreckung der Längskante (16) entspricht.

4. Heizungs- oder Klimatlsierungselnrichtung nach einem der vorstehenden Ansprüche, **dadurch gekennzeichnet, dass** der erste Wärmetauscher als Verdampfer ausgebildet ist.

5. Heizungs- oder Klimatislerungseinrichtung nach einem der vorstehenden Ansprüche, **dadurch gekennzeichnet, dass** der zweite Wärmetauscher als Heizkörper (5) ausgebildet ist.

6. Heizungs- oder Klimatisierungseinrichtung nach einem der vorstehenden Ansprüche, **dadurch gekennzeichnet, dass** der erste Luftkanal ein Kaltluft-(9) oder ein Frischluftkanal ist.

7. Heizungs- oder Klimatisierungseinrichtung nach einem der vorstehenden Ansprüche, **dadurch gekennzeichnet, dass** derzweite Luftkanal ein Warmluftkanal (8) ist.

8. Heizungs- oder Klimatisierungseinrichtung nach einem der vorstehenden Ansprüche, **dadurch gekennzeichnet, dass** ein dritter Wärmetauschervorgesehen ist der als elektrische Helzeinrichtung (6) ausgebildet ist

9. Heizungs- oder Kilmatisierungseinrichtung nach ei nem der vorstehenden Ansprüche, **dadurch gekennzeichnet, dass** bei vorhandenem Kaltluftstrom in Zwlschenstellungen zwischen den beiden Endstellungen"maximalwarm" und"maximal kalt" durch den Durchlass (18) ein Teil der kalten Luft des Kaltluftstroms aus dem Kaltluftkanal (9) in den Warmluftkanal (8) strömt.

## Claims

1. Heating or air-conditioning device, in particular for a motor vehicle, with a first heat exchanger and/or a second heat exchanger (5) arranged in a housing (2), a drum flap (7) that serves as a mixing flap which is arranged after the first and/or after the second heat exchanger in the area of the inlet to a first and a second air duct (9, 8) in a mixing chamber (10), wherein the drum flap (7) has in the area of at least one longitudinal edge (16) of its partly hollow-cylindrical zone (15) a projecting portion (17) which, in an end position of the drum flap (7), covers an opening (18) between the first air duct (9) and the second air duct (8) located ahead of the mixing chamber (10) in the flow direction, **characterised in that** the opening (18) is formed in the housing in such manner that it corresponds to the dimensions of the projecting portion (17) of the mixing flap, wherein the drum flap (7) has a projecting portion (17) on both of its longitudinal edges (16), the projecting portion (17) extends over only part of the longitudinal edge (16) of the drum flap (7), the projecting portion (17) is arranged centrally in relation to the longitudinal edge (16) of the drum flap (7), and the projecting portion (17) extends outwards in the radial direction, and the projecting portion (17) is essentially rectangular.

2. Heating or air-conditioning device according to claim 1, **characterised in that** a radially projecting portion (17) is provided precisely in the middle of each longitudinal edge (16).

3. Heating or air-conditioning device according to claim 2, **characterised in that** the length of the projecting portion (17) is 50% +/- 25%, in particular +/- 10% of the length of the longitudinal edge (16).

4. Heating or air-conditioning device according to any of the preceding claims, **characterised in that** the first heat exchanger is designed as an evaporator.

5. Heating or air-conditioning device according to any of the preceding claims, **characterised in that** the second heat exchanger is designed as a heater (5).

6. Heating or air-conditioning device according to any of the preceding claims, **characterised in that** the first air duct is a cold air duct (9) or a fresh air duct.

7. Heating or air-conditioning device according to any of the preceding claims, **characterised in that** the second air duct is a hot air duct (8).

8. Heating or air-conditioning device according to any of the preceding claims, **characterised in that** a third heat exchanger is provided, which is designed as an electric heating device (6).

9. Heating or air-conditioning device according to any of the preceding claims, **characterised in that** when a cold air stream is flowing in the intermediate position between the two end positions "maximum heat" and "maximum cold", part of the cold air from the cold air stream flows through the opening (18) from the cold air duct (9) into the hot air duct (8).

## Revendications

1. Système de chauffage ou de climatisation, en particulier pour un véhicule automobile, comprenant un premier échangeur de chaleur et / ou un deuxième échangeur de chaleur (5) disposé dans un carter (2), un volet tambour (7) qui sert de volet mélangeur et qui, en aval du premier et / ou du deuxième échangeur de chaleur, est disposé dans un espace de mélange (10) situé dans la zone de l'entrée d'un premier et d'un deuxième conduit d'air (9, 8), où le volet tambour (7), dans la zone d'au moins un bord longitudinal (16) de la zone (15) dudit volet tambour, ladite zone étant partiellement en forme de cylindre creux, présente une zone en saillie (17) qui, dans une position de fin de course du volet tambour (7), recouvre un passage (18) se trouvant en amont de l'espace de mélange (10), dans la direction d'écoulement, et placé entre le premier conduit d'air (9) et le deuxième conduit d'air (8), **caractérisé en ce que** le passage (18) est configuré dans le carter, de manière telle que le passage corresponde aux dimensions de la zone en saillie (17) du volet mélangeur, où le volet tambour (7) présente, sur les deux bords longitudinaux (16), une zone en saillie (17), où la zone en saillie (17) s'étend seulement sur une partie du bord longitudinal (16) du volet tambour (7), où la zone en saillie (17) est disposée au milieu par rapport au bord longitudinal (16) du volet tambour (7), et la zone en saillie (17) s'étend vers l'extérieur dans le sens radial, et où la zone en saillie (17) présente une forme sensiblement rectangulaire.

2. Système de chauffage ou de climatisation selon la revendication 1, **caractérisé en ce qu'**il est prévu, sur chaque bord longitudinal (16), exactement au milieu, une zone (17) en saillie dans le sens radial.

3. Système de chauffage ou de climatisation selon la revendication 2, **caractérisé en ce que** la dimension longitudinale de la zone en saillie (17) correspond à 50 % +/- 25 %, en particulier +/- 10 % de la dimension longitudinale du bord longitudinal (16).

4. Système de chauffage ou de climatisation selon l'une quelconque des revendications précédentes, **caractérisé en ce que** le premier échangeur de chaleur est configuré comme un évaporateur.

5. Système de chauffage ou de climatisation selon l'une quelconque des revendications précédentes, **caractérisé en ce que** le deuxième échangeur de chaleur est configuré comme un radiateur (5).

6. Système de chauffage ou de climatisation selon l'une quelconque des revendications précédentes, **caractérisé en ce que** le premier conduit d'air est un conduit d'air froid (9) ou d'air frais.

7. Système de chauffage ou de climatisation selon l'une quelconque des revendications précédentes, **caractérisé en ce que** le deuxième conduit d'air est un conduit d'air chaud (8).

8. Système de chauffage ou de climatisation selon l'une quelconque des revendications précédentes, **caractérisé en ce qu'**il est prévu un troisième échangeur de chaleur qui est configuré comme un dispositif de chauffage électrique (6).

9. Système de chauffage ou de climatisation selon l'une quelconque des revendications précédentes, **caractérisé en ce que**, lorsqu'il se produit un flux d'air froid, dans des positions intermédiaires comprises entre les deux positions de fin de course "chaud maximum" et "froid maximum", une partie de l'air froid du flux d'air froid provenant du conduit d'air froid (9) passe dans le conduit d'air chaud (8), à travers le passage (18).
